Europäisches Patentamt

European Patent Office

Office européen des brevets

(11) Veröffentlichungsnummer: **0 053 195**
A1

(12) # EUROPÄISCHE PATENTANMELDUNG

(21) Anmeldenummer: **80107456.8**

(22) Anmeldetag: **28.11.80**

(51) Int. Cl.³: **G 01 L 7/10,** G 01 D 5/04

(43) Veröffentlichungstag der Anmeldung: **09.06.82**
**Patentblatt 82/23**

(84) Benannte Vertragsstaaten: **FR GB IT**

(71) Anmelder: **Helmut Bernhardt GmbH u. Co. KG**
**Feinmechanik, Finsinger Strasse 1, D-8354 Metten (DE)**

(72) Erfinder: **Hüttinger, Johann, Breslauerstrasse 15,**
**D-8360 Deggendorf (DE)**

(74) Vertreter: **Leiser, Gottfried, Dipl.-Ing. et al,**
**Patentanwälte Prinz, Bunke & Partner Ernsberger**
**Strasse 19, D-8000 München 60 (DE)**

(54) **Zeigermesswerk.**

(57) Ein Zeigermeßwerk hat ein Chassis (6), das durch ein einstückiges Formteil aus Kunststoff gebildet ist und eine ebene Trennwand (7) aufweist. Auf der einen Seite der Trennwand (7) ist ein Meßwertgeber (G) befestigt, der ein der Trennwand (7) zugewandtes Hubglied (3) aufweist und Änderungen der Meßgröße in mechanische Auslenkungen des Hubglieds (3) umwandelt, die im wesentlichen senkrecht zur Trennwand (7) gerichtet sind. Auf der anderen Seite der Trennwand (7) ist eine Zeigerwelle (5) senkrecht zur Trennwand (7) gelagert. Ein Meßwertumformer (U) setzt die Auslenkung des Hubglieds (3) in eine Drehung der Zeigerwelle (5) um. Zu diesem Zweck ist in der Trennwand (7) ein Ausschnitt angebracht, in dem eine Schwinge um eine zur Trennwand (7) parallele Achse schwenkbar gelagert ist. Die Schwinge bildet einen Teil des Meßwertumformers und steht mit dem Hubglied (3) so in Verbindung, daß sie durch die Auslenkung des Hubglieds (3) verschwenkt wird. Weitere Bestandteile des Meßwertumformers wandeln die Schwenkbewegung der Schwinge in eine Drehung der Zeigerwelle (5) um.

Patentanwälte

Dipl.-Ing.          Dipl.-Chem.                    Dipl.-Ing. 0053195

E. Prinz    –    Dr. G. Hauser    –    G. Leiser

Ernsbergerstrasse 19

8 München 60

28. November 1980

Helmut Bernhardt GmbH u. Co. KG
Feinmechanik
Finsinger Str. 1

8354   M e t t e n

Unser Zeichen: B 1579a

## Zeigermeßwerk

Die Erfindung bezieht sich auf ein Zeigermeßwerk mit einem Chassis, einer am Chassis drehbar gelagerten Zeigerwelle, einem Meßwertgeber, der Änderungen der Meßgröße in eine mechanische Auslenkung eines Hubglieds umsetzt, und mit einem Meßwertumformer, der die mechanische Auslenkung des Meßwertgebers in eine Drehung der Zeigerwelle umsetzt.

Zeigermeßwerke dieser Art erfordern einen beträchtlichen Herstellungs- und Montageaufwand, vor allem wenn ein kompakter Aufbau gefordert wird, der Meßwertumformer jedoch eine große Gesamtübersetzung aufweisen muß, d.h. eine verhältnismäßig kleine Auslenkung des Meßwertgebers in einen großen Zeigerausschlag umwandeln muß. Ein Beispiel für ein solches Zeigermeßwerk ist ein Vakuummetallkapsel-Niederdruckmesser, bei welchem eine Druckänderung von 100 mm Hg eine Auslenkung der Vakuummetallkapsel von etwa 0,4 mm ergibt, die in einen Zeigerausschlag von 360° umzuwandeln ist. Eine so große Übersetzung läßt sich nur mit einer mehrstufigen Getriebekette erzielen, die außerdem noch eine Richtungsänderung durchführen muß, weil die Forderung nach kompaktem Aufbau nur dann zu erfüllen ist, wenn die Zeigerwelle senkrecht zur Oberfläche der Vakuummetallkapsel steht, so daß die mechanische Auslenkung parallel zur Achse der Zeigerwelle gerichtet ist. Es ist daher eine präzise Lagerung einer Reihe von Getriebeteilen kleiner Abmessungen erforderlich, wobei besondere Maßnahmen zu treffen sind, um die Reibungswiderstände im Meßwertumformer möglichst klein zu halten und jedes Spiel zu eliminieren.

Aufgabe der Erfindung ist die Schaffung eines Zeigermeßwerks der angegebenen Art, das auch bei großem Übersetzungsverhältnis des Meßwertumformers mit geringem Herstellungs- und Montageaufwand in sehr kompatker Bauweise herstellbar ist.

Nach der Erfindung wird dies dadurch erreicht, daß das Chassis ein einstückiges Formteil aus Kunststoff ist, das eine ebene Trennwand hat, daß der Meßwertgeber auf der einen Seite der Trennwand so befestigt ist, daß das Hubglied der Trennwand zugewandt ist und die mechanische Auslenkung im wesentlichen senkrecht zur Trennwand gerichtet ist, daß die Zeigerwelle auf der anderen Seite der Trennwand senkrecht zu dieser gelagert ist, daß in der Trennwand ein Ausschnitt angebracht ist, daß in dem Ausschnitt eine ein Glied des Meßwertumformers bildende Schwinge um eine zur Trennwand parallele Achse schwenkbar gelagert ist, und daß die Schwinge mit dem Hubglied derart in Verbindung steht, daß die mechanische Auslenkung auf die Schwinge übertragen wird.

Das Chassis des Meßwertumformers kann als einstückiges Kunststoff-Formteil, beispielsweise im Spritzguß, mit großer Genauigkeit einfach und preiswert hergestellt werden, wobei die zur Lagerung der verschiedenen Glieder des Meßwertumformers erforderlichen Teile zum größten Teil einstückig angeformt werden können. Die in einem Ausschnitt der Trennwand angeordnete Schwinge bildet ohne zusätzlichen Raumbedarf das erste Glied in der Übertragungskette des Meßwertumformers und hat zur Folge, daß alle folgenden Glieder des Meßwertumformers auf der dem Meßwertgeber abgewandten Seite der Trennwand liegen. Die Montage dieser Glieder wird dadurch sehr erleichtert, und es läßt sich ein sehr kompakter Aufbau erzielen. Ferner ist der Ein- und Ausbau des Meßwertgebers völlig unabhängig vom Meßwertumformer.

Vorteilhafte Ausgestaltungen und Weiterbildungen der Erfindung sind in den Unteransprüchen gekennzeichnet.

Weitere Merkmale und Vorteile der Erfindung ergeben sich aus der folgenden Beschreibung von Ausführungsbeispielen, die in der Zeichnung dargestellt sind. In der Zeichnung zeigen:

Fig. 1 eine Seitenansicht eines Zeigermeßwerks nach der Erfindung,

Fig. 2 eine Draufsicht auf das Zeigermeßwerk von Fig. 1 bei abgenommenem Zeiger,

Fig. 3 eine Unteransicht des Zeigermeßwerks von Fig. 1 und 2,

Fig. 4 eine Detailansicht der Befestigung der Trägerplatte,

Fig. 5 eine Detailansicht des Meßwertgebers, der Schwinge und des Winkelhebels,

Fig. 6 eine Draufsicht auf die Anordnung von Fig. 5,

Fig. 7 eine Schnittansicht der Lagerung des Winkelhebels,

Fig. 8 eine Schnittansicht der Halteteile für die Platine,

Fig. 9 eine Detailansicht der Verankerung der Spiralfeder und

Fig. 10 eine Detailansicht ähnlich wie in Fig. 5 mit einer abgeänderten Ausführungsform der Schwinge.

Das in der Zeichnung dargestellte Zeigermeßwerk besteht im wesentlichen aus einem Meßwertgeber G und einem Meßwertumformer U. Als Beispiel ist ein Niederdruck-Meßwerk dargestellt, dessen Meßwertgeber G durch eine stabilisierte Vakuummetallkapsel 1 gebildet ist, die aus zwei am Rand gasdicht miteinander verbundenen Metallmembranen 2, 3 besteht. Durch eine geeignete Vorspannung der Metallmembranen ist dafür gesorgt, daß die Metallmembranen durch den sie umgebenden Luftdruck nicht in Anlage aneinandergedrückt werden, sondern je nach der Höhe des Luftdrucks einen mehr oder weniger großen Abstand voneinander haben. Eine solche Membrankapsel wird als stabilisierte Membrankapsel bezeichnet, im Gegensatz zu den ebenfalls bekannten nichtstabilisierten Membrankapseln, bei denen die Metallmembranen durch eine zusätzliche Stützfeder im Abstand voneinander gehalten werden. Da die eine Metallmembran 2 in einer später noch erläuterten Weise festgelegt ist, erfährt die andere Metallmembran 3 bei einer Änderung des Luftdrucks eine mechanische Auslenkung. Der Meßwertumformer U ist ein Übertragungswerk mit einer entsprechenden Gesamtübersetzung, das die Auslenkung des Meßwertgebers G in eine ablesefähige Drehbewegung eines Zeigers 4 umwandelt, der an einer drehbar gelagerten Zeigerwelle 5 angebracht ist. Der Meßwertumformer U muß die kleinen Auslenkungen der Membrankapsel (ca. 0,4 mm für 100 mm Hg) in einen großen Zeigerausschlag (360°) umwandeln und hat zu diesem Zweck ein großes Gesamtübersetzungsverhältnis, das durch verschiedene Übersetzungsstufen erreicht wird.

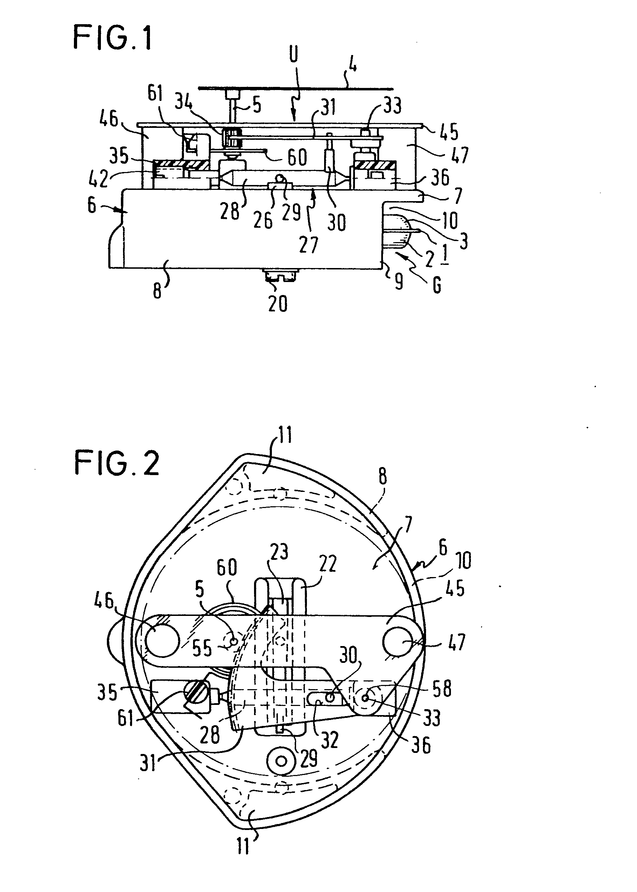

Alle Bestandteile des Zeigermeßwerks werden von einem Chassis 6 getragen, das durch ein einstückiges Kunststoff-Formteil gebildet ist, das beispielsweise im Spritzguß hergestellt ist. Das Chassis 6 hat eine ebene Trennwand 7, und aus Fig. 1 ist zu erkennen, daß der Meßwertgeber G auf der einen Seite der Trennwand 7 liegt (in

0053195

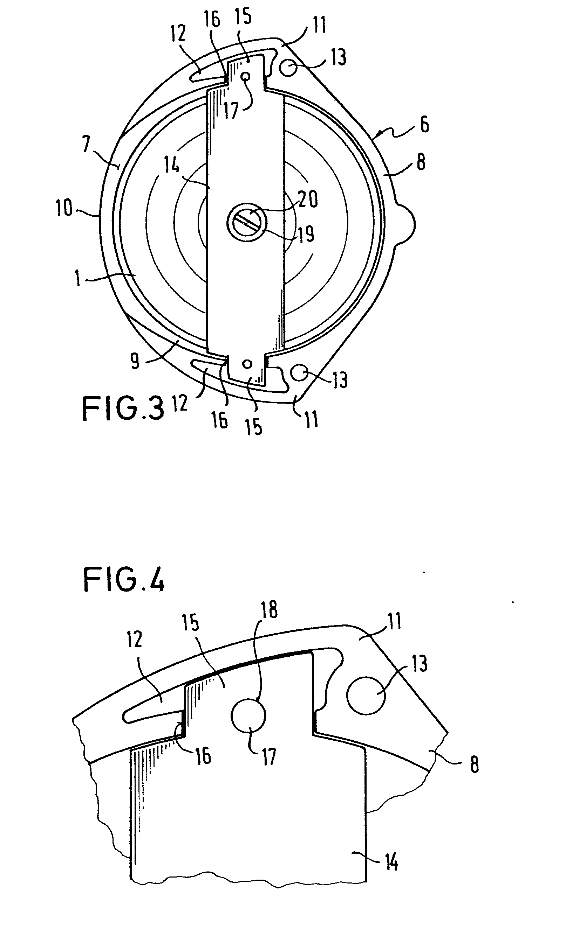

Fig. 1 unten), während der Meßwertumformer U auf der anderen Seite der Trennwand 7 angeordnet ist ( in Fig. 1 oben), wobei die Zeigerwelle 5 senkrecht zur Trennwand 7 steht. Am Rand der Trennwand 7 ist eine sich um den größten Teil des Umfangs erstreckende Umfangswand 8 angeformt, die in der Darstellung von Fig. 1 von der Trennwand nach unten ragt. Die Innenfläche der Umfangswand 8 begrenzt eine im wesentlichen kreisrunde Kammer 9, in der die Vakuummetallkapsel 1 untergebracht ist; an der Stelle, an der die Umfangswand 8 unterbrochen ist, besteht ein Ausschnitt 10, in dem die Vakuummetallkapsel 1 in Fig. 1 sichtbar ist. Die Außenfläche der Umfangswand 8 ist nicht kreisförmig, sondern weist zwei einander etwa diametral gegenüberliegende seitliche Ausbuchtungen 11 auf (Fig. 2 und 3), in denen jeweils ein Hohlraum 12 gebildet ist. Im massiven Teil jeder Ausbuchtung 11 ist eine Bohrung 13 angebracht, in die eine Blechschraube zur Befestigung der Chassis an einem Träger, beispielsweise dem Boden eines Meßwerkgehäuses, eingeschraubt werden kann.

Quer über die offene Unterseite der Kammer 9 erstreckt sich parallel zu der Trennwand 7 eine Trägerplatte 14, an der die Vakuummetallkapsel 1 befestigt ist (Fig. 3). Die Trägerplatte 14 ist in den seitlichen Ausbuchtungen 11 an der Unterseite der Umfangswand 8 befestigt, wie in Fig. 4 genauer dargestellt ist. Zu diesem Zweck hat die Trägerplatte 14 an jedem Ende einen Ansatz 15 von geringerer Breite, der in einen entsprechenden Ausschnitt 16 an dem den Hohlraum 12 an der Innenseite begrenzenden Teil der Umfangswand 8 eingelegt ist, so daß die Trägerplatte 14 mit der Unterseite der Umfangswand 8 flach abschneidet. Ein in dem Ausschnitt 16 an der Umfangswand 8 angeformter Kunststoffzapfen 17 ist durch eine entsprechende Bohrung 18 der Trägerplatte gesteckt und vernietet.

Dadurch ist auf einfache Weise eine sichere und sehr genaue Positionierung der Trägerplatte 14 erzielt.

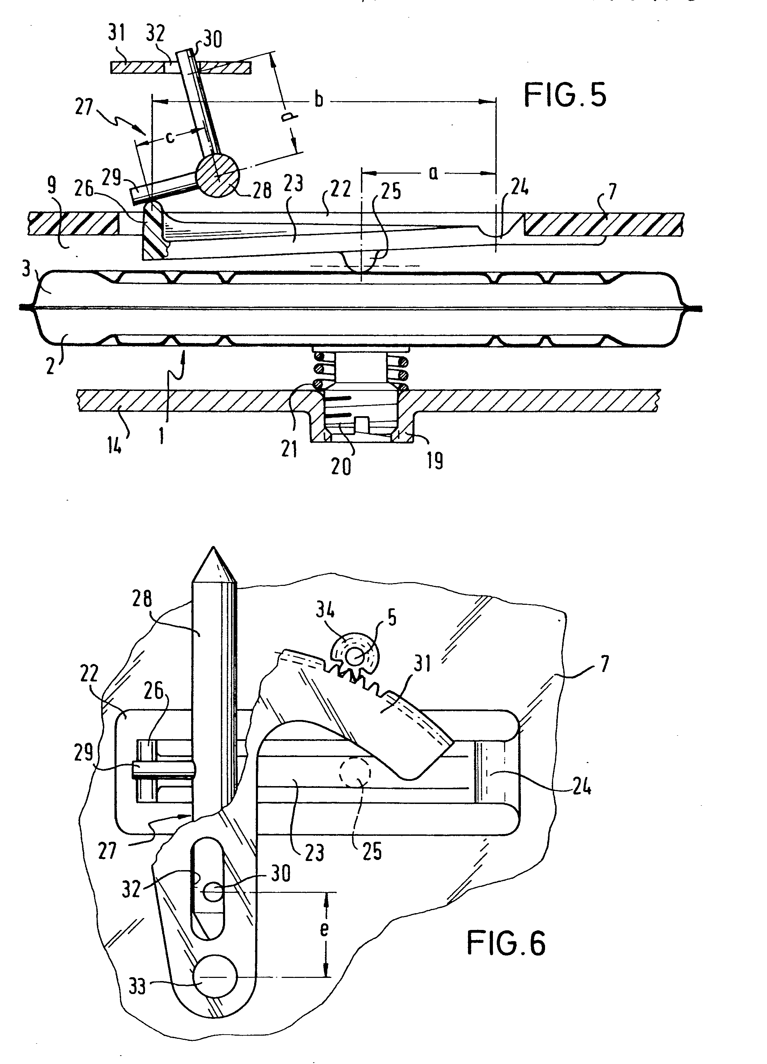

In der Mitte der Trägerplatte 14 ist eine Gewindebuchse 19 (Fig. 5) angebracht, in die eine an der unteren Metallmembran 2 befestigte Madenschraube 20 eingeschraubt ist. Eine die Madenschraube 20 umgebende Druckfeder 21 beseitigt ein vorhandenes Flankenspiel zwischen der Madenschraube 20 und der Gewindebuchse 19. Durch Verdrehen der Madenschraube 20 mit Hilfe eines Schraubenziehers ist es möglich, den Abstand zwischen der Metallmembran 2 und der Trägerplatte 14 zu justieren.

Da somit die Metallmembran 2 relativ zum Chassis festgelegt ist, bildet die Metallmembran 3 das Hubglied des Meßwertgebers, das der Trennwand 7 zugewandt ist und bei einer Änderung des Luftdrucks eine mechanische Auslenkung geringen Hubs in der Richtung zur Trennwand 7 hin oder von dieser weg erfährt.

Wie in Fig. 5 gezeigt ist, ist in der Trennwand 7 ein länglicher Ausschnitt 22 angebracht, in dem eine Schwinge 23 mittels eines Gelenks 24 um eine parallel zur Trennwand 7 liegende Achse schwenkbar gelagert ist. Bei dem in Fig. 5 dargestellten Ausführungsbeispiel ist die Schwinge 23 in einem Stück mit dem Chassis 6 hergestellt, so daß sie aus dem gleichen Kunststoff wie das Chassis 6 besteht. Das Gelenk 24 ist in diesem Fall durch eine Stelle verringerten Querschnitts gebildet, die in der Schwinge 23 nahe dem Verbindungspunkt mit der Trennwand 7 angebracht ist. An der der Vakuummetallkapsel 1 zugewandten Unterseite der Schwinge 23 ist ein Abtastvorsprung 25 angeformt, der im Mittelpunkt der Metallmembran 3 an deren Oberseite anliegt. Die Anlagefläche des Abtastvorsprungs 25 ist abgerundet. Die Schwinge 23 ist an der Trennwand 7 schräg nach unten ragend angeformt, so daß sie beim Einbau der Vakuummetallkapsel 1 nach oben gedrückt wird. Dadurch wird eine elastische Vorspannung erzeugt, die den Abtastvorsprung 25 in Anlage an der Metallmembran 3 hält.

Durch die beschriebene Ausbildung wird die durch Luftdruckänderungen verursachte mechanische Auslenkung der Metallmembran 3 in eine Schwenkbewegung der Schwinge 23 um das Gelenk 24 umgewandelt.

Am freien Ende der Schwinge 23 ist ein nach oben aus dem Ausschnitt 16 herausragender Ansatz 26 angeformt, der die Schwenkbewegung der Schwinge 23 auf einen Winkelhebel 27 überträgt, der an der Oberseite der Trennwand 7 um eine zur Trennwand parallele Achse drehbar gelagert ist. Wie in Fig. 1 und 6 zu erkennen ist, ist der Winkelhebel durch eine an beiden Enden spitzengelagerte Spindel 28 gebildet, von der zwei Stifte 29, 30 im rechten Winkel zueinander und axial im Abstand voneinander radial abstehen. Der kürzere Stift 29 bildet den einen Arm des Winkelhebels und liegt an der abgerundeten Oberseite des Ansatzes 26 an (Fig. 5); der längere Stift 30, der den anderen Winkelhebelarm bildet, ragt nach oben in einen Ausschnitt 32 eines Zahnsegments 31, das mittels einer senkrecht zur Trennwand 7 stehenden Welle 33 drehbar gelagert ist und mit einem auf der Zeigerwelle 5 angebrachten Ritzel 34 kämmt (Fig. 6).

Wie Fig. 5 erkennen läßt, bildet die Schwinge 23 einen einarmigen Hebel, der die Auslenkung der Metallmembran 3 im Verhältnis der Hebelarme b:a übersetzt, die durch die Abstände des Abtastvorsprungs 25 bzw. des Ansatzes 26 vom Gelenk 24 bestimmt sind. Der Winkelhebel 27 ist ein zweiarmiger Hebel, der eine weitere Hebelübersetzung im Verhältnis der wirksamen Hebelarme d:c ergibt. Eine dritte Hebelübersetzung erfolgt im Zahnsegment 31 im Verhältnis des Radius der Verzahnung des Zahnsegments zu dem Abstand e des Angriffspunktes des Stiftes 30 von der Drehachse des Zahnsegments. Schließlich besteht zwischen dem Zahnsegment 31 und dem Ritzel 34 eine Zahnradübersetzung im Verhältnis der Radien des Zahnsegments und des Ritzels.

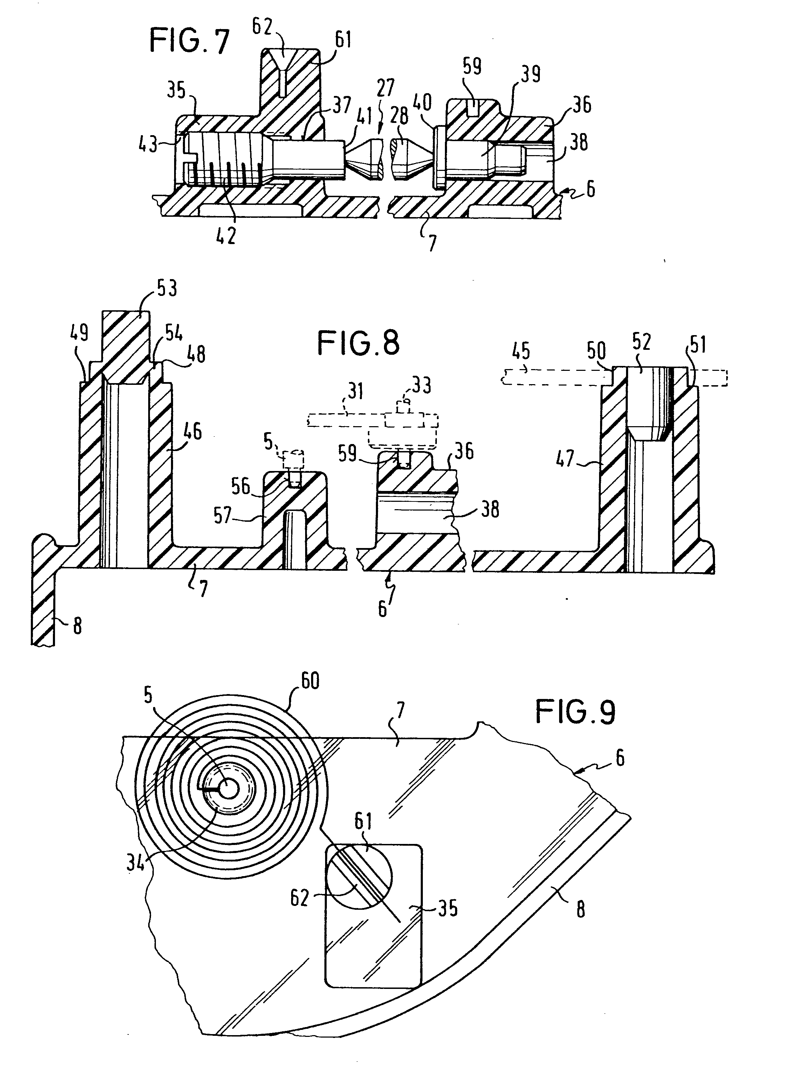

Fig. 7 zeigt die Einzelheiten der Lagerung des Winkelhebels 27 am Chassis 6. An der Oberseite der Trennwand 7 sind im Abstand voneinander zwei Lagerblöcke 35, 36 angeformt, in denen koaxiale Bohrungen 37, 38 angebracht sind. In die Bohrung 38 des Lagerblocks 36 ist ein Spitzenlager 39 eingesetzt, das durch einen am Ende angeformten Bund 40 größeren Durchmessers an der Stirnfläche des Lagerblocks 36 abgestützt ist. In die Bohrung 37 des Lagerblocks 35 ist ein Spitzenlager 41 eingesetzt, das mit einem Gewindekopf 42 versehen ist, der in einen Gewindeabschnitt 43 der Bohrung 37 eingeschraubt ist. Nach dem Einsetzen der an den Enden der Spindel 28 angebrachten Lagerspitzen in die beiden Spitzenlager kann das Lagerspiel durch Verschrauben des Gewindekopfes 42 genau einjustiert werden.

Zur Lagerung der Zeigerwelle 5 und der Welle 33 des Zahnsegments 31 ist oberhalb der Trennwand 7 eine dazu parallele Platine 45 aus Metall befestigt. Zu diesem Zweck sind an der Oberseite der Trennwand 7 zwei Distanzsäulen 46 und 47 angeformt (Fig. 8), die bei dem dargestellten Ausführungsbeispiel über ihre ganze Höhe hohl sind. Die Distanzsäule 46 hat am oberen Ende einen Abschnitt 48 verringerten Querschnitts, so daß eine Schulter 49 gebildet ist. In entsprechender Weise hat die Distanzsäule 47 am oberen Ende einen Abschnitt 50 verringerten Querschnitts, so daß eine Schulter 51 gebildet ist. Die Platine 45 hat zwei Öffnungen, die genau an die Querschnitte der Abschnitte 48, 50 angepaßt sind; die Abschnitte 48, 50 werden durch diese Öffnungen gesteckt, so daß die Platine 45 auf den Schultern 49, 51 aufliegt. Die Befestigung der Platine auf den Distanzsäulen 46, 47 geschieht durch eine Preßverbindung mittels eines Pfropfens, der nach dem Aufstecken der Platine in das hohle Innere der Distanzsäule eingepreßt wird. An der Säule 47 ist in Fig. 8 die fertige Preßverbindung nach dem Einpressen des Pfropfens 52 gezeigt. An der Säule 46 von Fig. 8 ist eine besonders vorteilhafte Maßnahme zur Herstellung dieser Preßverbindung dargestellt: Der Pfropfen 53 wird am Ende der Distanzsäule 46 so mitangeformt, daß er mit der Distanzsäule durch eine leicht abscherbare Kunststoffbrücke 54 verbunden ist. Nach dem Aufstecken der Platine wird auf die Oberseite des Pfropfens 53 ein nach unten gerichteter Druck ausgeübt, durch den die Kunststoffbrücke abgeschert wird und dann der Pfropfen 53 in das hohle Innere der Distanzsäule 46 eingepreßt wird.

Die Platine 45 ist mit einer Lagerbohrung 55 versehen, durch die das nach oben ragende Ende der Zeigerwelle 5 hindurchgeführt ist. Das untere Ende der Zeigerwelle 5 ist in einem Sackloch 56 gelagert, das an der Oberseite eines Lagerbocks 57 gebildet ist, der in einem Stück mit dem Chassis 6 an der Oberseite der Trennwand 7 angeformt ist. Die Achse der Zeigerwelle 5 liegt exzentrisch zu der Mitte der Trennwand 7 und der Vakuummetallkapsel 1; dies ergibt einen besonders kompakten Aufbau, wenn der Winkelausschlag des Zeigers 4 auf weniger als 180° beschränkt ist.

Das obere Ende der Welle 33 des Zahnsegments 31 ist in einer weiteren Lagerbohrung 58 in der Platine 45 gelagert, während das untere Ende der Welle 33 in einem an der Oberseite des Lagerblocks 36 gebildeten Sackloch 59 gelagert ist.

Damit selbst kleine Druckschwankungen eine Anzeige hervorrufen, muß eine spielfreie Übertragung der Bewegungen der Metallmembran 3 auf die Zeigerwelle 5 gewährleistet sein. An der Schwinge geschieht dies durch die bereits zuvor erwähnte elastische Vorspannung, mit der der Abtastvorsprung gegen die Metallmembran gedrückt wird. Ein Spiel in den übrigen Bestandteilen des Übertragungswerks wird durch eine Rückstellfeder aufgenommen, die auf die Zeigerwelle 5 ein Drehmoment ausübt. Bei dem dargestellten Ausführungsbeispiel ist diese Rückstellfeder durch eine Spiralfeder 60 gebildet, welche die Zeigerwelle unterhalb des Ritzels 34 umgibt und mit ihrem inneren Ende an der Zeigerwelle verankert ist. Das äußere Ende der Spiralfeder 60 ist an einem Verankerungsblock 61 verankert, der an der Oberseite des Lagerblocks 35 angeformt ist und einen sich nach oben erweiternden Schlitz 62 aufweist, in den das Ende der Spiralfeder eingelegt wird (Fig. 7 und 9).

Der Schlitz für die Verankerung des Endes der Spiralfeder kann auch in einer der Distanzsäulen 46, 47 angebracht sein; dies ergibt den zusätzlichen Vorteil, daß der Schlitz nach dem Anbringen der Platine 45 verschlossen ist und dadurch ein Austreten des Endes der Feder aus dem Schlitz verhindert wird.

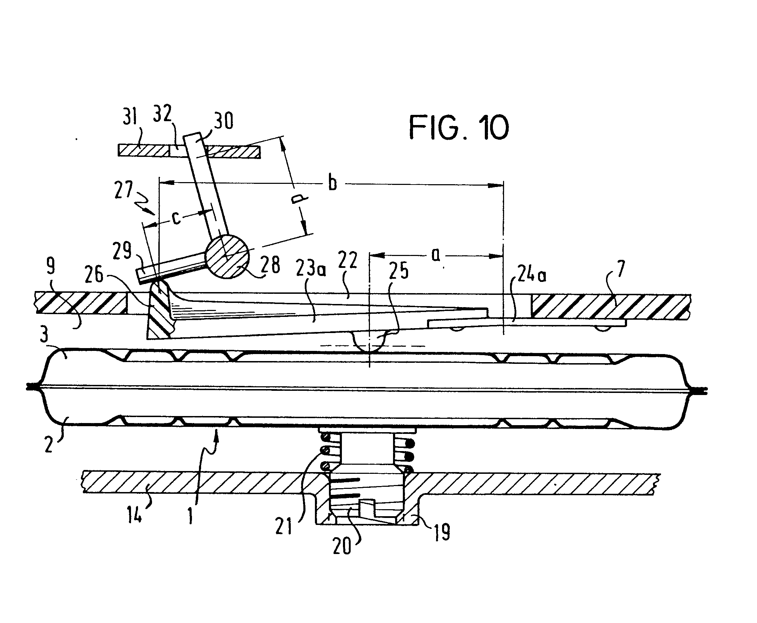

Fig. 10 zeigt eine andere Ausführungsform des Zeigermeßwerks, die sich von der zuvor beschriebenen Ausführungsform hinsichtlich der Ausbildung der Schwinge unterscheidet. Die Schwinge 23a von Fig. 10 ist ein vom Chassis 6 getrennt hergestelltes Teil, das mittels eines das Gelenk bildenden elastischen Streifens 24a aus Metall oder Kunststoff an der Trennwand 7 befestigt ist. An Stelle des elastischen Streifens 24a kann natürlich auch jede andere geeignete Gelenkverbindung verwendet werden. Diese Ausführungsform ergibt den Vorteil, daß der Werkstoff der Schwinge unabhängig vom Werkstoff des Chassis gewählt werden kann. Die Schwinge kann in diesem Fall wahlweise aus Metall, Kunststoff oder einem anderen Material bestehen. Ferner besteht eine größere Freizügigkeit in der Bemessung der elastischen Vorspannung, mit der die Schwinge gegen den Meßwertgeber gedrückt wird.

Es sind natürlich noch andere Abänderungen des beschriebenen Ausführungsbeispiels möglich. So kann die Befestigung der Trägerplatte 14 auf gleiche Weise wie die Befestigung der Platine 45 mittels Distanzsäulen erfolgen. Die Anbringung der Umfangswand 8 ergibt den Vorteil, daß sie die Trennwand 7 versteift, wodurch die Elastizität der Trennwand und der daran angeformten Lager- und Distanzteile beseitigt wird. Ferner kann am Rand der Trennwand 7 eine Umfangswand angeformt werden, die ringsum geschlossen ist und nach oben und unten ragt, so daß sie zusammen mit einem Boden ein das ganze Meßwerk umschliessendes Gehäuse bildet. An einer solchen Umfangswand können dann auch eine Skala für den Zeiger 4 und ein Deckglas befestigt werden.

An Stelle der Vakuummetallkapsel 1 kann natürlich auch jeder beliebige andere Meßwertgeber verwendet werden, der in der Lage ist, eine mechanische Auslenkung in Abhängigkeit von der Meßgröße auf den Abtastvorsprung 24 der Schwinge 23 auszuüben. Beispielsweise kann der Meßwertgeber ein Bimetallstreifen sein, so daß das Zeigermeßwerk dann ein Temperaturmesser ist, oder auch das Haar bzw. der feuchtigkeitsempfindliche Faden eines Hygrometers.

Patentanwälte

Dipl.-Ing.  
E. Prinz  —  Dr. G. Hauser  —  Dipl.-Ing. G. Leiser

Ernsbergerstrasse 19

8 München 60

0053195

28. November 1980

Helmut Bernhardt GmbH u. Co. KG  
Feinmechanik  
Finsinger Str. 1

8354  M e t t e n

Unser Zeichen: B 1579a

P a t e n t a n s p r ü c h e

1. Zeigermeßwerk mit einem Chassis, einer am Chassis drehbar gelagerten Zeigerwelle, einem Meßwertgeber, der Änderungen der Meßgröße in eine mechanische Auslenkung eines Hubglieds umsetzt, und mit einem Meßwertumformer, der die mechanische Auslenkung des Meßwertgebers in eine Drehung der Zeigerwelle umsetzt, dadurch gekennzeichnet, daß das Chassis ein einstückiges Formteil aus Kunststoff ist, das eine ebene Trennwand hat, daß der Meßwertgeber auf der einen Seite der Trennwand so befestigt ist, daß das Hubglied der Trennwand zugewandt ist und die mechanische Auslenkung im wesentlichen senkrecht zur Trennwand gerichtet ist, daß die Zeigerwelle auf der anderen Seite der Trennwand senkrecht zu dieser gelagert ist, daß in der Trennwand ein Ausschnitt angebracht ist, daß in dem Ausschnitt eine ein Glied des Meßwertumformers bildende Schwinge um eine zur Trennwand parallele Achse schwenkbar gelagert ist, und daß die Schwinge mit dem Hubglied derart in Verbindung steht, daß die mechanische Auslenkung auf die Schwinge übertragen wird.

0053195

2. Zeigermeßwerk nach Anspruch 1, dadurch gekennzeichnet, daß die Schwinge aus Kunststoff in einem Stück mit dem Chassis geformt ist und daß die Schwenkachse der Schwinge durch eine angeformte Stelle verringerten Querschnitts gebildet ist.

3. Zeigermeßwerk nach Anspruch 1, dadurch gekennzeichnet, daß die Schwinge ein vom Chassis getrennt hergestelltes Kunststoff- oder Metallteil ist, das schwenkbar am Chassis befestigt ist.

4. Zeigermeßwerk nach einem der Ansprüche 1 bis 3, dadurch gekennzeichnet, daß an der Zeigerwelle ein Ritzel befestigt ist, das mit einem Zahnsegment kämmt, das um eine zur Trennwand senkrechte Welle drehbar gelagert ist, und daß an der die Zeigerwelle und das Zahnsegment tragenden Seite der Trennwand ein Winkelhebel mit einem am Ende der Schwinge anliegenden Arm und mit einem am Zahnsegment angreifenden Arm um eine zur Trennwand parallele Achse schwenkbar gelagert ist.

5. Zeigermeßwerk nach Anspruch 4, dadurch gekennzeichnet, daß die Lager des Winkelhebels in am Chassis angeformte Lagerblöcke eingesetzt sind.

6. Zeigermeßwerk nach Anspruch 4 oder 5, dadurch gekennzeichnet, daß am Ende der Schwinge ein abgerundeter Vorsprung angeformt ist, an dem der eine Arm des Winkelhebels anliegt.

7. Zeigermeßwerk nach einem der Ansprüche 4 bis 6, dadurch gekennzeichnet, daß an einer Zwischenstelle der Schwinge ein in Richtung zum Meßwertgeber ragender abgerundeter Abtastvorsprung angeformt ist, der an dem Hubglied anliegt.

0053195

8. Zeigermeßwerk nach Anspruch 7, dadurch gekennzeichnet, daß die Schwinge unter einer elastischen Vorspannung steht, die den Abtastvorsprung in Anlage am Hubglied hält.

9. Zeigermeßwerk nach einem der Ansprüche 1 bis 8, dadurch gekennzeichnet, daß die Zeigerwelle einerseits in einem am Chassis angeformten Sacklager und andrerseits in einer parallel zur Trennwand angeordneten Platine gelagert ist, die mittels am Chassis angeformter Distanzsäulen im Abstand von der Trennwand befestigt ist.

10. Zeigermeßwerk nach Anspruch 9, dadurch gekennzeichnet, daß jede Distanzsäule zumindest an dem dem Chassis abgewandten Ende hohl ausgebildet ist und einen eine Schulter bildenden Abschnitt verringerten Querschnitts aufweist, der durch eine Öffnung gleichen Querschnitts in der auf der Schulter aufliegenden Platine gesteckt ist, und daß die Platine auf der Distanzsäule durch eine Preßverbindung mittels eines in das hohle Innere der Distanzsäule eingepreßten Pfropfens befestigt ist.

11. Zeigermeßwerk nach Anspruch 10, dadurch gekennzeichnet, daß der Pfropfen am Ende der Distanzsäule abscherbar angeformt ist.

12. Zeigermeßwerk nach einem der Ansprüche 9 bis 11 unter Rückbeziehung auf Anspruch 4, dadurch gekennzeichnet, daß die Welle des Zahnsegments einerseits in einem am Chassis angeformten Sacklager und andrerseits in der Platine gelagert ist.

13. Zeigermeßwerk nach einem der Ansprüche 9 bis 12, dadurch gekennzeichnet, daß in einer Distanzsäule ein Schlitz zur Verankerung des Endes einer auf die Zeigerwelle einwirkenden Rückstellfeder angebracht ist.

14. Zeigermeßwerk nach einem der Ansprüche 1 bis 12, dadurch gekennzeichnet, daß am Chassis ein Verankerungsblock zur Verankerung des Endes einer auf die Zeigerwelle einwirkenden Rückstellfelder angeformt ist.

15. Zeigermeßwerk nach einem der vorhergehenden Ansprüche, dadurch gekennzeichnet, daß der Meßwertgeber auf einer parallel zur Trennwand liegenden Trägerplatte befestigt ist, die durch am Rand der Trennwand angeformte Distanzteile im Abstand von der Trennwand gehalten ist.

16. Zeigermeßwerk nach Anspruch 15, dadurch gekennzeichnet, daß die Distanzteile eine den Meßwertgeber wenigstens teilweise umgebende Umfangswand bilden.

17. Zeigermeßwerk nach einem der vorhergehenden Ansprüche, dadurch gekennzeichnet, daß am Rand der Trennwand eine Umfangswand angeformt ist, die zu einem alle Teile des Meßwertgebers und des Meßwertumformers einschließenden Gehäuse gehört.

18. Zeigermeßwerk nach einem der vorhergehenden Ansprüche, dadurch gekennzeichnet, daß die Zeigerwelle exzentrisch zu der Mitte der Trennwand des Chassis angeordnet ist.

19. Zeigermeßwerk nach einem der Ansprüche 1 bis 18, dadurch gekennzeichnet, daß der Meßwertgeber eine auf Druck ansprechende Vakuummetallkapsel ist.

20. Zeigermeßwerk nach einem der Ansprüche 1 bis 18, dadurch gekennzeichnet, daß der Meßwertgeber ein auf Temperaturänderungen durch elastische Verformung ansprechender Bimetallstreifen ist.

21. Zeigermeßwerk nach einem der Ansprüche 1 bis 18, dadurch gekennzeichnet, daß der Meßwertgeber ein auf Schwankungen der Luftfeuchtigkeit ansprechender Hygrometerfaden ist.

FIG.1

FIG.2

0053195

FIG.3

FIG.4

FIG.5

FIG.6

FIG. 7

FIG. 8

FIG. 9

FIG. 10

Europäisches
Patentamt

**EUROPÄISCHER RECHERCHENBERICHT**

0053195

Nummer der Anmeldung

EP 80 10 7456

| Kategorie | Kennzeichnung des Dokuments mit Angabe, soweit erforderlich, der maßgeblichen Teile | betrifft Anspruch |
|---|---|---|
| | **EINSCHLÄGIGE DOKUMENTE** | |
| | EP - A - 0 011 681 (DOSTMANN) <br> * Zusammenfassung; Figuren * | 1 |
| | DE - B - 1 236 421 (FAVRE-LEUBA) <br> * Ansprüche; Figuren * | 1-3 |
| | US - A - 4 036 061 (SPEIDEL) <br> * Figuren; Seite 1, Spalte 2, Zeile 57 - Seite 2, Spalte 1, Zeile 16 * | 1, 4-6 |
| | FR - A - 2 209 093 (PARMENTIER) <br> * Figuren; Ansprüche * | 1, 4-6, 7-12 |

**KLASSIFIKATION DER ANMELDUNG (Int. Cl.)**

G 01 L 7/10
G 01 D 5/04

**RECHERCHIERTE SACHGEBIETE (Int. Cl.)**

G 01 D 5/02
5/04
5/06
G 01 L 7/10
7/12
7/14

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 12-08-1981 | LLOYD |

EPA form 1503.1 06.78